# EUROPEAN PATENT APPLICATION

(11) **EP 4 686 583 A1**
(43) Date of publication of application: **04.02.2026**
(21) Application number: 25189089.3
(22) Date of filing: 11.07.2025
(51) Int. Cl.: B60C 11/03, B60C 9/22, B60C 9/20, B29D 30/06, B60C 11/00, B60C 11/01

(54) **HIGH-PERFORMANCE TIRE, TIRE MOLD AND PROCESS**

(30) Priority: 30.07.2024 US 202418788408
(71) Applicant: The Goodyear Tire & Rubber Company, Akron, OH 44316 (US)
(72) Inventor: FEHL, Helmut Wolfgang, D-36381 Schluchtern (DE); SEEHAFER, Bernd, L - 2146 Colmar-Berg (LU); GOERL, Roman, D-63785 Obernburg am Main (DE); BILMEZ, Umit, D-63452 Hanau (DE); WEBER, Andrea, L-7750 Colmar-Berg (LU); SCHIEL, Martina, L-7750 Luxembourg (LU); KHAN, Muhammad Umair, 63450 Hanau (DE)
(74) Representative: Kutsch, Bernd

(57) **Abstract**

A tire (1) is disclosed comprising a tread portion (9) that is divided in the tire axial width direction between a first shoulder portion (13), a central portion (15) and a second shoulder portion (17). The radially outer surface of the tread portion (9) has a profile with a concave shape over at least a part of its axial width. Also disclosed is a mold (27) to produce such a tire (1) and a method of producing such a tire (1).

## Description

### Field of the Invention

The present invention relates to a car tire and to the tire mold and process to produce such a tire. Particularly, the invention relates to a high-performance (HP), ultra-high performance (UHP), ultra-ultra-high performance (UUHP), or race tire.

### Background of the Invention

High-performance tires have superior driving properties compared to conventional tires. High-performance tires are known to the person skilled in the art and described for example in US 2023/0158838 A1.

Vehicle masses have to be balanced to improve the cornering stability and speed. In that respect some cars, particularly the rear-wheel-drive sport cars, have a suspension system characterized at the rear axle by the use of high camber angles. It was found that, if subjected to sudden accelerations, the tires can have the rear axle oversteering or have a transitory zigzag motion caused by the loss of grip of the rear axle.

For the rear axle (RA) application of sports cars, there is a need for tires with optimized footprints in square shape and load distribution. These optimized footprints are needed to increase the rear axle stability of sportscars, especially in dynamic conditions and at higher speeds.

It is known that to reduce or prevent the loss of grip during cornering resulting in sudden load transfers, the footprint area has to be prevented from deforming to concentrate almost solely on the outer side of the tire.

US2021/0138837 A1 provides a tread pattern showing a low void-to-rubber ratio in the central area and comprising shoulder portions having a lower block mobility on the shoulder portion facing the outer side of the car with respect to the block mobility of the shoulder portion facing the inner side of the car. Such a tread pattern provides great advantages but does not solve all problems of high-speed tire shape deformation.

It is also known to add a third overlay layer in the center of the footprint to keep the shape and load distribution of the footprint more constant in dynamic conditions and at higher speeds.

There is still a need to optimize tire footprints for high-performance tires, such as high-performance tires for RA applications, that keep the shape and load distribution of footprint constant in dynamic conditions and at higher speeds.

It has now been discovered that or more of the aforementioned needs can be fulfilled by the provision of a tire, tire mold and process to produce a tire wherein the surface in the central portion of the tread has a profile with a concave shape over at least a part of its width.

Indeed, it was found that such a concavity shape on the tread portion of the tire as the same effect as a third overlay layer in the center of footprint in keeping the footprint constant.

### Summary of the Invention

The invention relates to a tire in accordance with claim 1, to a mold in accordance with claim 13 and to a method in accordance with claim 15.

Dependent claims refer to preferred embodiments of the invention.

According to a first preferred aspect, the present invention relates to a tire comprising a tread portion that is divided in the tire width direction between a first shoulder portion, a central portion, and a second shoulder portion; wherein the surface of the tread portion has a profile with a concave shape over part of its width; with preference, wherein the surface in the central portion of the tread has a profile with a concave shape over at least a part of its width.

Indeed, it has been found by the inventors that the presence of a concavity on the tread surface, and in particular in the central portion of the tread allows for optimizing tire footprints for rear axle applications.

As demonstrated by the examples, the presence of the concave shape on the tread allows for optimization of tire footprints for RA application but without the need for additional reinforcement material or a third overlay layer. Therefore, the tire according to the invention shows a reduced tire weight, cycle time in production, and costs in production by comparison to tires of similar tire footprints for rear axle applications that comprise such an overlay layer in the central portion.

It is understood that the concavity is determined without considering the first and second circumferential grooves.

Advantageously, the tire is a high-performance (HP), ultra-high performance (UHP), ultra-ultra-high performance (UUHP), or race tire.

With preference, the tread portion comprises a tread pattern with first circumferential grooves that axially delimit the first shoulder portion and the second shoulder portion with respect to the central portion of the tread; wherein the surface of the tread portion has a profile with a concave shape in at least a part of the width direction of the central portion.

In a preferred embodiment, an equatorial plane of the tire is defined, the concave shape defines a concavity, and the concavity crosses the equatorial plane of the tire

For example, the tread portion comprises a tread pattern with first circumferential grooves and one or more optional second circumferential grooves, the second circumferential grooves when present being arranged in the central portion; wherein the concave shape defines a concavity with a depth of at most 1.2 mm; preferably at most 1.0 mm; or at most 0.8 mm; wherein the concavity is determined without considering the first and second circumferential grooves.

For example, the tread portion comprises a tread pattern with first circumferential grooves and one or more optional second circumferential grooves, the second circumferential grooves when present being arranged in the central portion; wherein the concave shape defines a concavity with a depth of at least 0.4 mm; preferably at least 0.5 mm, or at least 0.6 mm; wherein the concavity is determined without considering the first and second circumferential grooves.

In one or more embodiments, the tire has an asymmetric tread wherein the first shoulder portion is the outer shoulder portion and the second shoulder portion is the inner shoulder portion

In one or more embodiments, the tread portion comprises a tread pattern with first circumferential grooves that axially delimit the first shoulder portion and the second shoulder portion with respect to the central portion of the tread; wherein the first shoulder portion has a width larger than the one of the second shoulder portion; preferably, the ratio of the width of the first shoulder portion to the width of the second shoulder portion is at least 1.5 or at least 2.0.

Advantageously, the tire comprises at most two overlay layers in the central portion of the tread portion and/or is devoid of additional reinforcement material different from the overlay layer in the central portion. It is understood that the additional reinforcement material is also different from the belts.

According to one or more preferred embodiments, the tire comprises at least two belts and at least one overlay layer that extends over an axial width larger than that of the belts so as to cover the axially outer edge of all the belts.

According to one or more embodiments, the tire comprises at least two belts, and the tread comprises a tread portion placed between two axially outer edge portions, wherein the axially outer edge portions cover the axially outer edge of at least one of the belts; and wherein the tread portion and the axially outer edge portions are made from different rubber compositions

According to one or more preferred embodiments, the tread portion is made from a first rubber composition that comprises at least 90 phr of a diene-based elastomer and from 120 phr to 250 phr of a filler, wherein the filler comprises at least 90 phr of carbon black.

For example, the tread portion is made from a first rubber composition, and the axially outer edge portions are made from a second rubber composition different from the first rubber composition, wherein the first rubber composition comprises at least 90 phr of carbon black, and the second rubber composition comprises at most 80 phr of carbon black.

For example, the tread portion is made of at least two layers of rubber composition wherein at least one layer is made of the first rubber composition and comprises at least 90 phr of carbon black.

According to one or more preferred embodiments, at least one overlay layer comprises at least two fiber components with a first fiber component is selected from aliphatic polyamide, nylon, polyester, cellulose, and mixtures thereof; and a second fiber component is selected from aromatic polyamide, fiberglass, aramid, polyester, polyketone, polyvinylalcohol, carbon fibers, polyester, cellulose, and mixtures thereof; provided that the first and second fiber components are different.

With preference, at least one overlay layer comprises a first fiber component being nylon and a second fiber component being aramid.

According to one or more preferred embodiments, the tire comprises at least two belts wherein a first belt comprises a plurality of parallel elongated metal reinforcing elements disposed at a first belt angle; a second belt in a radially inner position with respect to said first belt, comprising a plurality of parallel elongated metal reinforcing elements disposed at a second belt angle of the opposite sign with respect to said first belt angle; wherein said first and second belt angles have an absolute value of 10 to 50 degrees with respect to the equatorial plane of the tire.

With preference, the tire further comprises a third belt in a radially inner position with respect to said first and second belts, wherein the third belt comprises a plurality of parallel elongated reinforcing elements disposed at a third belt angle; wherein said third belt angle is of opposite sign with respect to said second belt angle; wherein the third belt angle has an absolute value of 70 to 90 degrees with respect to the equatorial plane of the tire.

According to one or more embodiments, wherein the tread portion further comprises a tread pattern with first circumferential grooves that axially delimit the outer shoulder portion and the inner shoulder portion with respect to the central portion of the tread; wherein the central portion comprises one or more second circumferential grooves; wherein the central portion has a void-to-rubber ratio that is smaller than the void-to-rubber ratio of the outer shoulder portion or the inner shoulder portion or both the outer shoulder portion and the inner shoulder portion; the void-to-rubber ratio of the central portion is determined without considering the first and second circumferential grooves.

Another object of the present invention is to provide a high-performance (HP), ultra-high performance (UHP), ultra-ultra-high performance (UUHP), or race tire with optimized tire footprints for rear axle applications.

According to a second preferred aspect, the present invention relates to a tire mold suitable to produce the tire according to the first aspect, the tire mold comprising a tread mold portion that is divided in a tire circumferential direction into a plurality of mold segments wherein each mold segment has an inner face with a tread mold portion from which one or more blades and optional sipes that extend from the surface of the inner face, wherein first circumferential blades axially delimit a first shoulder portion and a second shoulder portion with respect to a central portion of the tread mold portion; wherein the central portion has a surface profile with a convex shape over at least a part of the width of the central portion.

As it is understood, the fact that the central portion of the tread mold portion has a convex shape in the width direction results in a concavity of the central portion of the tread in the width direction of the tire.

With preference, the tread mold portion comprises first circumferential blades and one or more optional second circumferential blades, the second circumferential blades when present being arranged in the central portion, wherein the convex shape defines a convexity with a height of at most 1.2 mm; preferably at most 1.0 mm; or at most 0.8 mm; wherein the convexity is determined without considering the first and second circumferential blades.

3333With preference, the tread mold portion comprises first circumferential blades and one or more optional second circumferential blades, the second circumferential blades when present being arranged in the central portion, wherein the convex shape defines a convexity with a height of at least 0.4 mm; preferably at least 0.5 mm, or at least 0.6 mm; wherein the convexity is determined without considering the first and second circumferential blades.

According to a third preferred aspect, the invention provides a method of producing a tire according to the first aspect, the method comprising at least the steps of:
a) extruding a tread intended to be divided in the tire width direction between a first shoulder portion, a central portion, and a second shoulder portion, wherein the tread has a constant thickness across its width;
b) providing a carcass with belts and at most two overlay layers;
c) attaching the tread to the carcass so as to cover the belts and the one or two overlay layers;
d) attaching two sidewalls to the carcass and over the axial edges of the tread; and
e) curing the tire in a tire mold according to the second aspect.

### Definitions

In the context of this description, the following definitions are adopted:
The "tire footprint" means the contact patch or area of contact of the tire tread with a flat surface at zero speed and under normal load and pressure. ASTM F870-94: 2016 is to be used to obtain a tire footprint impression (synonymous with a tread footprint impression) and the measurements in the tire footprint such as the void area defining the grooves. The length and the width of the grooves are determined from the footprint impression. In particular, the lateral groove length can be measured directly on the footprint impression, i.e., on the footprint (used hereafter as a synonym).
"Asymmetric tread" means a tread that has a tread pattern not symmetrical about the equatorial plane of the tire.
"Symmetric tread" means a tread that has a tread pattern symmetrical about the equatorial plane of the tire.
"Groove" means an elongated void area in a tread that can extend circumferentially or laterally about the tread in a straight, curved or zigzag manner. Circumferentially and laterally extending grooves sometimes have common portions.
The "void area" is a portion of the tire footprint is that is not contacted by ribs or blocks.
"Sipes" means small slots molded into the tread elements that subdivide the tread surface and improve traction. A sipe is narrower than a groove.
"Tread element" or "traction element" means a rib or a block element defined by having a shape adjacent groove.
"Rib" means a circumferentially extending strip of rubber on the tread which is defined by at least one circumferential groove and either a second groove or a lateral edge. The strip is laterally divided by circumferential grooves.
"Lateral edge" means a line tangent to the laterally outermost or innermost tread contact footprint as measured under normal load and tire inflation, the line being parallel to the equatorial center plane.
"Equatorial center plane" means the plane perpendicular to the tire axis of rotation and passing through the center of the tread.
"Equatorial plane" of the tire means a plane perpendicular to the rotation axis of the tire and dividing the tire into two symmetrically equal parts.
"Outer side of the tire" means the tire side facing the outside of the vehicle on which the tire is mounted.
"Inner side of the tire" means the tire side facing the vehicle on which the tire is mounted.
"Circumferential" or "longitudinal" direction means a direction generally pointing to the direction in which the tire rotates or anyway slightly tilted with respect to the direction in which the tire rotates.
"Axial direction" or "axially" means a direction generally parallel to, or anyway slightly tilted , with respect to the axis of rotation of the tire.
"Radial direction" or "radially" means a direction substantially orthogonal to the axis of rotation of the tire.
"Cord" means one of the reinforcement strands of which the plies in the tire are comprised.
"Lateral" means an axial direction.
"Ply" means a continuous layer of rubber-coated parallel cords.
"Tread width (TW)" means the length of the tread surface in the axial direction, that is, in a plane passing through the axis of rotation of the tire.
"Void-to-rubber ratio" means the ratio between the total area of the grooves of a determined portion of the tire tread pattern intended to rest on the ground (possibly of the whole tread pattern) and the total area of the same portion of the tread pattern (possibly of the whole tread pattern).

### Brief Description of the Drawings

The invention will be described by way of example and with reference to the accompanying drawings in which:
FIG. 1 is a schematic cross-section of a crown portion of a tire in accordance with an embodiment of the invention;
FIG. 2 is a schematic cross-section of a crown portion of a tire in accordance with another embodiment of the invention;
FIG. 3 is a schematic partial cross-sectional view of a tire mold according to the invention; and
FIG. 4 is a view showing an example of a tread molding element according to the invention.

### Detailed Description of Preferred Embodiments of the Invention

In the following description, the term "comprise" is synonymous with "include" and is not restrictive in that it authorizes the presence of other elements in the tire or tire mold or other steps in the process to which it relates. It is understood that the term "comprise" includes the terms "consist of". In the different figures, the same references designate identical or similar elements.

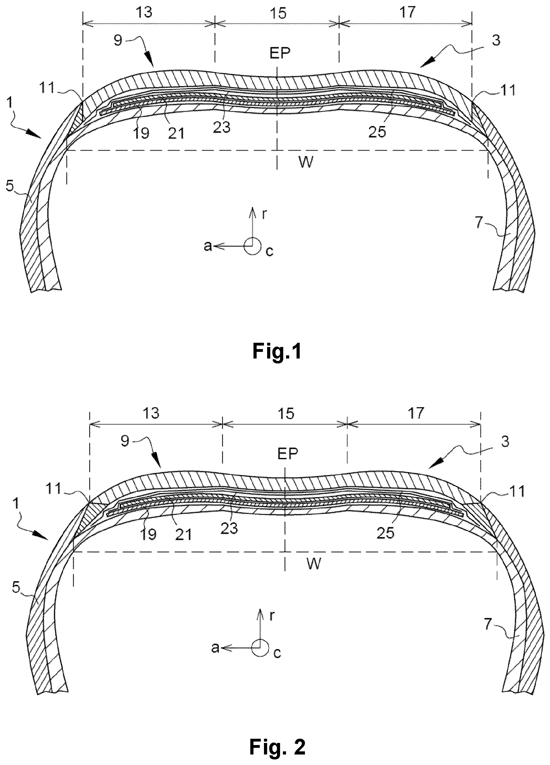

Figure 1 is a schematic cross-section of a tire 1. The tire 1 can be a pneumatic tire or a non-pneumatic tire. Preferably, it is a pneumatic tire. The tire 1 may be a radial tire or a bias tire. Preferably, the tire 1 is a radial tire. In a preferred embodiment, the tire 1 is a tire having a speed symbol of "V", "W" or "Y", preferably "W" or "Y". Such speed symbols are depicted on at least one sidewall of the tire. In an embodiment, the tire is a summer tire.

The tire 1 has a plurality of tire components including a tread 3, two sidewalls 5 with one or more radial plies extending from and wrapped about two annular beads, a carcass ply 7, and a belt reinforcement structure arranged radially between the carcass and the tread, preferably in a crown area of the tire.

The tread comprises at least a tread portion 9 that is intended to contact the road when driving. In preferred embodiments, the tread comprises a tread portion and two axially outer edge portions 11, wherein the tread portion 9 is placed between the two axially outer edge portions 11. The axially outer edge portions 11 are not intended to contact the road upon driving.

The tread 3 has a total width w measured in the axial direction a, which is perpendicular to the equatorial plane (EP) of the tire 1. The distance halfway between the axially outer edges of the tread defines the centerline of the tread 3 or equatorial plane of the tire 1. The tread portion 9 has the total axial width w measured between its outermost edges. It is noted that such a measurement can be carried out on a cross-section of a tire along the axial direction. The axial direction is understood as directions parallel to the direction of the axis of rotation of the tire. A radial direction is a direction perpendicular to the axis of rotation of the tire.

In Figure 1, the tread 3 is schematically depicted without grooves but may have one or more circumferential grooves, e.g., delimiting one or more circumferential ribs or rows of tread blocks of the tire (not shown). The axial direction a, the radial direction r, and the circumferential direction c are shown for better intelligibility in Figure 1.

The tread portion 9 is divided in the tire width direction between a first shoulder portion 13, a central portion 15, and a second shoulder portion 17. In preferred embodiments, the first shoulder portion 13 is the outer shoulder portion and the second shoulder portion 17 is the inner shoulder portion. The tread portion 9 shows a tread pattern with first circumferential grooves that axially delimit the first shoulder portion 13 and the second shoulder portion 17 with respect to the central portion 15 of the tread portion 9. The central portion may comprise one or more second circumferential grooves.

As it will be seen in detail, the tire of the invention is remarkable in that the surface of the tread portion 9 has a profile with a concave shape over part of its width; preferably, the surface of the tread portion 9 has a profile with a concave shape over at least a part the width direction of the central portion 15. As a consequence, and as shown in Figure 1, the tread 3 surface shows a wave profile in the width direction.

For example, the tread portion comprises a tread pattern with first circumferential grooves and one or more optional second circumferential grooves, the second circumferential grooves when present being arranged in the central portion; wherein the concave shape defines a concavity with a depth of at most 1.2 mm; preferably at most 1.0 mm; or at most 0.8 mm; wherein the concavity is determined without considering the first and second circumferential grooves.

For example, the tread portion comprises a tread pattern with first circumferential grooves and one or more optional second circumferential grooves, the second circumferential grooves when present being arranged in the central portion; wherein the concave shape defines a concavity with a depth of at least 0.4 mm; preferably at least 0.5 mm, or at least 0.6 mm; wherein the concavity is determined without considering the first and second circumferential grooves.

In an embodiment, an equatorial plane of the tire is defined, the concave shape defines a concavity, and the concavity crosses the equatorial plane of the tire

In an embodiment, the concavity extends over the whole width of the central portion, the central portion is said symmetrical. However, in an embodiment, the concavity extends over only a part of the width of the central portion; in such a case the central portion is said asymmetrical. For example, the concavity extends between a first and a second circumferential groove. Whether the central portion is selected to be symmetrical or asymmetrical, the person skilled in the art will have an advantage in that the concavity crosses the equatorial plane of the tire; with preference, the deepest point of the concavity is on or in the neighboring of the equatorial plane of the tire. with preference, the equatorial plane of the tire and the deepest point of the concavity are less than 5 cm apart; preferably less than 3 cm apart; more preferably less than 1.5 cm apart in the width direction of the tire.

The belt reinforcement structure comprises at least two belts 19, 21 (or, in other words, belt plies) having laterally extending ends close to the shoulders of the tire and one or more overlay layers 23, 25. For example, an overlay layer 23, 25 can be obtained by helically winding during tire building a single flat strip of cord-reinforced material radially outward on of the belt plies. The carcass ply 7 and the belt reinforcement structure are typically made of cord-reinforced elastomeric material; the cords are preferably steel cord for the belt plies and textile cord for the carcass ply or plies and for the one or more overlay layers. Similarly, the annular beads have steel wires wrapped into a bundle also known as the bead core.

The tire 1 depicted in Figure 1 has two belts 19, 21 as typically present in passenger cars. A belt of belt ply is defined to be an annular layer or ply of parallel cords, woven or unwoven, underlying the tread, unanchored to the bead, and having both left or right cord angles. Usually, each belt 19, 21 has a metallic reinforcement. A radially inner belt 19 is broader than the radially outer belt 21, with respect to the axial direction (a) of the tire 1. Nevertheless, the invention encompasses tires with more than two belts such as three or four belts.

For example, the tire 1 comprises at least two belts 19, 21 wherein a first belt 19 comprises a plurality of parallel elongated metal reinforcing elements disposed at a first belt angle; a second belt 21 in a radially inner position with respect to said first belt 19, comprising a plurality of parallel elongated metal reinforcing elements disposed at a second belt angle of opposite sign with respect to said first belt angle; wherein said first and second belt angles have an absolute value of 10 to 50 degrees with respect to the equatorial plane of the tire 1; preferably from 12 to 45 degrees, more preferably from 14 to 40 degrees; even more preferably from 15 to 35 degrees; and most preferably from 17 to 27 degrees.

In an embodiment not illustrated, the tire further comprises a third belt in a radially inner position with respect to said first and second belts, wherein the third belt comprises a plurality of parallel elongated reinforcing elements disposed at a third belt angle; wherein said third belt angle is of opposite sign with respect to said second belt angle; wherein the third belt angle has an absolute value of 60 to 90 degrees with respect to the equatorial plane of the tire; preferably from 65 to 88 degrees, more preferably from 70 to 86 degrees; and even more preferably from 75 to 85 degrees.

The tire further comprises one or more overlay layers 23, 25. In a preferred embodiment, the tire comprises at most two overlay layers 23, 25 in the central portion 15 of the tread portion 9.

In an embodiment illustrated in Figure 2, a first radially inner overlay layer 23 extends axially over an axial width covering the axial outer edges of the radially outer belt 21 but not the edges of the radially inner belt 19. A second radially outer overlay 25 extends over an axial width larger than that of the radially inner belt 19 so as to cover the belt edge of the radially inner belt 19 and also the belt edge of the radially outer belt 21.

The tire 1 of the invention has at least one overlay layer 23, 25 and preferably at most two overlay layers 23, 25. The tire is preferably devoid of a third overlay layer or strip or additional reinforcement material, at least in the central portion 15 of the tread portion 9.

The one or more overlay layers 23, 25 are made from a material that can comprise a single fiber component or at least two different fiber components (i.e., a hybrid material). Preferably, at least one overlay layer 23, 25 is made from a hybrid material that comprises at least two different fiber components.

In an embodiment, at least one overlay layer 23, 25 is made from a material comprising one or more fiber components selected from polyamide, nylon, fiberglass, aramid, polyester, polyketone, polyvinylalcohol, carbon fibers, polyester, and cellulose.

With preference, at least one overlay layer 23, 25 is made from a hybrid material that comprises at least two different fiber components wherein a first fiber component is selected from aliphatic polyamide, nylon, polyester, cellulose, and mixtures thereof; and a second fiber component selected from aromatic polyamide, fiberglass, aramid, polyester, polyketone, polyvinylalcohol, carbon fibers, polyester, cellulose, and mixtures thereof; provided that the first and second fiber components are different. In preferred embodiments, at least one overlay layer comprises a first fiber component being nylon and/or a second fiber component being aramid.

In embodiments wherein the tire comprises two overlay layers 23, 25, the overlay layers can be made of the same material or from different materials. With preference, at least one overlay layer 23, 25 is made from a hybrid material and preferably comprises a mixture of nylon and aramid fibers.

The production of an overlay layer with at least two different fiber components is described in US 8,813,467 B2.

The tread 3 has at least one axially outer edge portion 11 (or axially outer portion) radially covering the axially outermost edge of at least one of the belt 19, 21 wherein the neighboring portion of the tread is intended to contact the ground (or road) when driving. Moreover, one of the sidewalls (or a respective sidewall) at least partially covers and contacts the axially outer surface of the axially outer edge portion 11 of the tread.

The tread 3 may comprises two axially outer edge portions 11 which are attached to or in contact with the tread portion 9. The axially outer edge portion 11 may help to improve the bond between sidewall 5 and tread portion 9. In particular, the sidewalls 5 are laid over or cover the respective axially outer edge portion 11 of the tread 3. Moreover, the sidewalls 5 cover the carcass 7 at the axially outer sides of the tire 1.

In the embodiment illustrated in Figure 1, the axially outer edge portion 11 does not cover one or more of the belts 19, 21 or is, in other words, axially spaced from the belts 19, 21. Rather the belts 19, 21 are completely covered below the tread portion 9.

In the embodiment illustrated in Figure 2, the axially outer edge portion 11 of tire 1 covers the axially outer edge of one of the belts (i.e., herein the axially outer edge of the radially inner belt layer 19). In other words, the axially outer edge portion 11 of the tread 3 extends to an axially inner position which is axially closer to the equatorial plane EP of the tire 1 than the axially outer edge of the radially inner belt 19. At the same time, the axially outer edge portion 11 covers also the axially outer end of the radially outer overlay layer 25. In this non-limiting embodiment, the axially outer edge portion 11 may also be described as wedge-shaped portion or has in other words a wedge-shaped or essentially triangular cross-section in a plane perpendicular to the equatorial plane EP of the tire 1.

The sidewall 5 of the tire 1 may cover the axially outer edge portion 11 of the tread 3 or is, in other words, laid over the tread 3 and the axially outer edge portion 11.

In an embodiment, the tire has a sidewall over tread design or a tread over sidewall design; preferably, a tread over sidewall design.

The tread 3 has at least one axially outer edge portion 11 radially covering the axially outermost edge of at least one of the belts 19, 21, that may comprise a rubber composition different than the one of the tread portion 9. Preferably, a first side of the axially outer edge portion contacts the tread portion 9, a second side covers at least one belt edge (19, 21) (preferably the axially outermost belt edge of the at least two belts), and/or a third side contacts (directly) the sidewall 5. In other words, the sidewall 5 touches the axially outer edge portion 11 of the tread 3 and/or is cured to it. The axially outer edge portion 11 touches also directly the tread portion 9. Typically, the axially outer edge portion 11 has been extruded together with the remaining tread, in particular extruded together with the tread portion 9.

In one embodiment, the axially outer edge portion 11 extends axially over 1% to 20%, preferably over 2% to 15%, of the total axial width of the tread 3. The axial width of the tread 3 is determined herein in the tire 1 in a cured state, wherein the total axial width of a tread 3 is measured in a cross-section of the tire, perpendicular to the equatorial plane of the tire.

In still another preferred embodiment, the tread portion 9 comprises or consists of a first rubber composition, and the axially outer edge portion 11 comprises or consists of a second rubber composition, wherein the first rubber composition is different from the second rubber composition.

For example, the tread portion 9 comprises or consists of a first rubber composition, wherein the first rubber composition comprises:
at least 90 phr of a diene-based elastomer (for example 100 phr); and
from 120 phr to 250 phr of a filler.
optionally one or more tackifying resins, preferably selected from the list of phenolformaldehyde resins and alkylphenol acetylene resins.

The filler preferably comprises at least 40 phr of silica or at least 90 phr of silica.

In a preferred embodiment, the first rubber composition of the tread portion 9 comprises at least 150 phr of a filler comprising at least 90 phr of carbon black, preferably more than 100 phr of carbon black, as e.g. useful in UUHP or race tires.

For example, the tread portion is made of at least two layers of rubber composition wherein at least one layer is made of the first rubber composition and comprises at least 90 phr of carbon black.

In an example, the first rubber composition comprises 30 phr to 100 phr (or from 40 phr to 80 phr) of a hydrocarbon resin, preferably selected from the list of aliphatic (C5) resins, aromatic (C9) resins, cyclopentadiene resins, dicyclopentadiene resins, coumarone indene resins, terpene resins, styrene/α-methyl-styrene resins, terpene phenol resins, or combinations of those. Preferably the first rubber composition comprises predominantly at least one styrene-butadiene rubber, such as at least one solution polymerized styrene-butadiene rubber. In another embodiment, said diene-based elastomer comprises at least 50 phr of styrene butadiene rubber. In general, the diene-based elastomers, such as the styrene-butadiene rubber or the solution polymerized-styrene butadiene rubber are preferably functionalized for the coupling to silica.

For example, the axially outer edge portion 11 comprises or consists of a second rubber composition, wherein the second rubber composition comprises:
from 25 phr to 70 phr of polyisoprene (preferably at least 30 phr or at least 35 phr);
from 30 phr to 70 phr of polybutadiene composition (preferably at least 35 phr);
from 30 phr to 90 phr of carbon black as filler material (preferably at least 40 phr and/or at most 80 phr); and
optionally one or more tackifying resins, preferably selected from the list of phenolformaldehyde resins and alkylphenol acetylene resins.

The polyisoprene can be synthetic polyisoprene rubber and/or natural rubber. The person skilled in the art will recognize that the second rubber composition is not suitable for a tread portion intended to contact a road. The second rubber composition has for example a higher elongation at break than the first rubber composition and preferably also a lower Shore A hardness and/or lower storage modulus G'. The storage modulus G' is determined with an RPA 2000^{™} Rubber Process Analyzer of the company Alpha Technologies, based on ASTM D5289 (or equivalent) at 1% strain, 1 Hz, and 100°C. The storage modulus can be considered as a stiffness indicator.

The sidewall 5 can be made of the second rubber composition or can be a different rubber composition than the axially outer edge portion 11.

As indicated above, a tread portion that is divided in the tire width direction between a first shoulder portion 13, a central portion 15, and a second shoulder portion 17; wherein the surface of the tread portion 9 has a profile with a concave shape over part of its width. With preference, the tire 1 of the invention comprises a tread portion 9 that is divided in the tire width direction between an outer shoulder portion 13, a central portion 15, and an inner shoulder portion 17; wherein the surface of the central portion 15 shows a concave shape in the width direction over at least part of the width of the central portion. By surface, it is understood the radially outer tread surface.

The tire 1 includes from 2 to 4 main grooves extending in the tire circumferential direction arranged from an outside to an outside. The distinction between outside and inside side of the tire is relevant in the embodiment wherein the tire 1 has an asymmetric tread pattern. In such a case, the tires show marks to differentiate the two sides so that the side marked "outside" is towards the outside of the vehicle and the "inside" side towards the inside when the tire is mounted on the vehicle. When the tread pattern of the tire is symmetric, with the outer shoulder portion being symmetrical to the inner shoulder portion the equatorial plane of the tire. Tire with symmetric tread patterns are devoid of marks to differentiate the two sides.

The tread pattern of the tire 1 can be symmetric or asymmetric. With preference, the tire 1 has an asymmetric tread pattern. More preferably, the width of the outer shoulder portion 13 is greater than the width of the inner shoulder portion 17. For example, the ratio of the width of the outer shoulder portion 13 to the width of the inner shoulder portion 17 is at least 1.1; preferably at least 1.3; more preferably at least 1.5; even more preferably at least 1.7, most preferably at least 1.9; and even most preferably at least 2.0 or at least 2.2.

In a preferred embodiment, the shaping of the tread portion 9 to show concavity is obtained without reducing the thickness of the tread portion 9. Therefore, at least in the green tire, the thickness of the tread portion 9 in the central portion 15 is the same as the one of the inner and outer shoulders 13, 17.

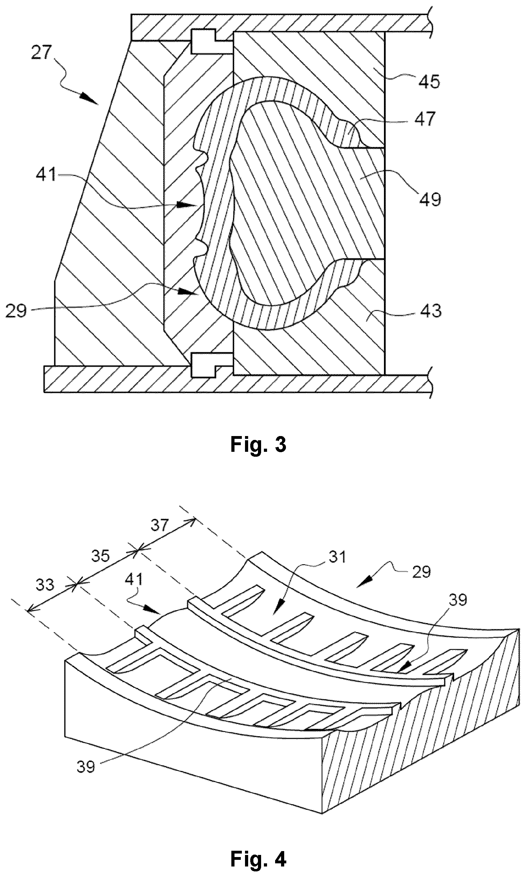

According to the invention, the concavity is obtained using a specific tire mold 27. Reference is made to Figure 3 that is a cross-sectional view showing an outline structure of a tire metallic mold. The tire mold includes a tread mold molding section arranged on an outer periphery thereof so as to mold a tread pattern of a tire, a lower side molding section 43, and a upper side molding section 45 which mold sides of a tire. A green tire 47 is supported on a rigid core 49 and set in the mold upon closing of the respective molding sections in this state to be subjected to vulcanizing and molding in the mold. The tread molding section for molding of a tire tread divided in a tire circumferential direction into a plurality of mold segments 29. The tread molding section may comprise from 4 to 20 mold segments; preferably, from 5 to 12 mold segments; more preferably, from 6 to 10 mold segments; more preferably, from 6 to 9 mold segments.

Thus, the tire mold 27 of the invention comprises a tread mold portion that is divided in a tire circumferential direction into a plurality of mold segments 29. As seen in Figure 4, each mold segment has an inner face with a tread mold portion 31 from which one or more blades 39 (and optional one or more sipes) extend and which is divided in the tire width direction between an outer shoulder mold portion 33, a central mold portion 35, and an inner shoulder mold portion 37; wherein the central mold portion 35 has a convex shape 41 in the width direction.

Tire molds 27 are typically made from metal or metal alloy materials, such as aluminum or steel, which can be cast or CNC machined to form the desired negative tread pattern. Tire mold tread mold portion can also be made from additive manufacturing technology, such as 3D printing, which is then coupled to tire mold supports. For example, Tire mold tread mold portion can also be made from metal or metal alloy 3D printing such as steel 3D printing or aluminum 3D printing; preferably, steel 3D printing.

With preference, the tread mold portion comprises a tread pattern with first circumferential blades 39 that axially delimit the first shoulder mold portion 33 and the second shoulder mold portion 37 with respect to the central mold portion 35; wherein the surface of the tread mold portion has a profile with a convex shape in the width direction of the central mold portion 35.

For example, the tread mold portion comprises a tread pattern with first circumferential blades 39 and one or more optional second circumferential blades, the second circumferential blades when present being arranged in the central portion; wherein the convex shape 41 defines a convexity with a height of at most 1.2 mm; preferably at most 1.0 mm; or at most 0.8 mm; wherein the convexity is determined without considering the first and second circumferential blades.

For example, the tread portion comprises a tread pattern with first circumferential grooves and one or more optional second circumferential blades, the second circumferential blades when present being arranged in the central portion; wherein the convex shape defines a convexity with a height of at least 0.4 mm; preferably at least 0.5 mm, or at least 0.6 mm; wherein the convexity is determined without considering the first and second circumferential blades.

The invention also a method of producing a tire wherein the surface of the tread portion has a profile with a concave shape in the width direction of the central portion over at least a part of the width of the central portion, the method comprising at least the steps of:
a) extruding a tread intended to be divided in the tire width direction between an outer shoulder portion, a central portion, and an inner shoulder portion, wherein the read has a constant thickness across the outer shoulder portion, the central portion, and the inner shoulder portion;
b) providing a carcass with belts and at most two overlay layers;
c) attaching the tread to the carcass so as to cover the belts and the one or two overlay layers;
d) attaching two sidewalls to the carcass and over the axial edges of the tread; and
e) curing the tire in a tire mold wherein the tread mold central portion has a surface profile with a convex shape in the width direction.

Simulations have been performed to compare the footprints of reference tires (i.e., with a third reinforcement layer in the center portion of the tread portion) and the inventive tires (i.e., devoid of a third reinforcement layer in the center portion of the tread portion but showing a concave shape in a part of the width of the central portion, namely the part between a first and a second circumferential grooves wherein said part crosses the equatorial plane of the tire). The concave depth was 0.8 mm. The tread had an asymmetric pattern, with shoulders of different width. The results of the simulations surprisingly showed that the concave shape allows obtaining similar footprints as for the reinforced tires.

## Claims

1. A tire comprising a tread portion (9) that is divided in the tire axial width direction between a first shoulder portion (13), a central portion (15) and a second shoulder portion (17), wherein the radially outer surface of the tread portion (9) has a profile with a concave shape over at least a part of its axial width.

2. The tire of claim 1, wherein the tread portion (9) comprises a tread pattern with first circumferential grooves that axially delimit the first shoulder portion (13) and the second shoulder portion, respectively, with respect to the central portion (15) of the tread (9), and wherein (i) the surface of the tread portion (9) has a profile with a concave shape in the axial width direction of the central portion (15) over at least a part of the axial width of the central portion (15) and/or (ii) the surface of the tread portion (9) has a profile with a concave shape in the axial width direction of the central portion (15) only over at least a part of the axial width of the central portion (15) or only over the full axial width of the central portion (15).

3. The tire of claim 1 or 2, wherein the tread portion (9) comprises a tread pattern with first circumferential grooves and optionally one or more second circumferential grooves, the second circumferential grooves, when present, being arranged in the central portion (15), and wherein (i) the concave shape defines a concavity with a depth of at most 1.2 mm, preferably at most 1.0 mm or at most 0.8 mm, wherein the concavity is determined without considering the first and second circumferential grooves, and/or wherein (ii) the concave shape defines a concavity with a depth of at least 0.4 mm, preferably at least 0.5 mm or at least 0.6 mm, wherein the concavity is determined without considering the first and second circumferential grooves.

4. The tire of at least one of the previous claims, wherein (i) the concave shape defines a concavity with a depth of at most 1.2 mm, preferably at most 1.0 mm or at most 0.8 mm, and/or wherein (ii) the concave shape defines a concavity with a depth of at least 0.4 mm, preferably at least 0.5 mm or at least 0.6 mm; wherein said depth is determined as the maximum radial clearance or gap between the radially outermost surface of the tread portion (9) in an axial cross section of the tire (1) and a straight line extending in an axial cross section of the tire (1) from the radially outermost surface point of the tread portion (9) in the first shoulder portion (13) to the radially outermost surface point of the tread portion (9) in the first shoulder portion (13).

5. The tire of at least one of the previous claims, wherein an equatorial plane (EP) of the tire (1) is defined, wherein the concave shape defines a concavity and wherein the concavity crosses the equatorial plane (EP) of the tire (1) and/or is symmetrical with respect to the equatorial plane (EP) of the tire (1).

6. The tire of at least one of the previous claims, wherein the tire (1) has an asymmetric tread wherein the first shoulder portion (13) is the axially outer shoulder portion and the second shoulder portion (17) is the axially inner shoulder portion.

7. The tire of at least one of the previous claims, wherein the tread portion (9) comprises a tread pattern with first circumferential grooves that axially delimit the first shoulder portion (13) and the second shoulder portion (17) with respect to the central portion (15) of the tread, and wherein the first shoulder portion (13) has an axial width larger than the one of the second shoulder portion (17), the ratio of the axial width of the first shoulder portion (13) to the axial width of the second shoulder portion (17) being at least 1.5 or at least 2.0.

8. The tire of at least one of the previous claims, wherein the tire (1) comprises at most two overlay layers (23, 25) in the central portion (15) of the tread portion (9) and/or is devoid of additional reinforcement material different from an overlay layer (23, 25) in the central portion (15).

9. The tire of at least one of the previous claims, wherein the tire (1) comprises at least two belts (19, 21) and at least one overlay layer (21, 23) that extends over an axial width larger than that of the belts (19, 21) so as to cover the axially outer edge of all the belts (19, 21).

10. The tire of at least one of the previous claims, wherein the tire (1) further comprises at least two belts (19, 21) and the tread comprises a tread portion (9) placed between two axially outer edge portions, wherein the axially outer edge portions cover the axially outer edge of at least one of the belts (19, 21) and wherein the tread portion (9) and the axially outer edge portions are made from different rubber compositions.

11. The tire of at least one of the previous claims, wherein the tire (1) comprises at least two belts (19, 21), namely a first belt (19) comprising a plurality of parallel elongated metal reinforcing elements disposed at a first belt angle and a second belt (21) in a radially inner position with respect to said first belt comprising a plurality of parallel elongated metal reinforcing elements disposed at a second belt angle of the opposite sign with respect to said first belt angle, and wherein said first and second belt angles have an absolute value of 10 to 50 degrees with respect to the equatorial plane (EP) of the tire (1).

12. The tire of at least one of the previous claims, wherein the tread portion (9) comprises a tread pattern with first circumferential grooves that axially delimit the outer shoulder portion (13) and the inner shoulder portion (17) with respect to the central portion (15) of the tread, wherein the central portion (15) preferably comprises one or more second circumferential grooves, and wherein the central portion (1) has a void-to-rubber ratio that is smaller than the void-to-rubber ratio of the outer shoulder portion (13) and/or of the inner shoulder portion (17).

13. A tire mold for producing the tire according to at least one of the previous claims, the tire mold (27) comprising a tread mold portion (31) that is divided in a tire circumferential direction into a plurality of mold segments (29) wherein each mold segment (29) has an inner face with a tread mold portion from which one or more blades (39) and optional sipes that extend from the surface of the inner face, wherein first circumferential blades axially delimit a first shoulder portion (33) and a second shoulder portion (377) with respect to a central portion (35) of the tread mold portion (31), and wherein the tread mold central portion (35) has a surface profile with a convex shape over at least a part of the width of the central portion (35).

14. The tire mold of claim 13, wherein the tread mold portion (31) comprises first circumferential blades and optionally one or more second circumferential blades, the second circumferential blades, when present, being arranged in the central portion (35), wherein the convex shape defines a convexity with (i) a height of at most 1.2 mm, preferably at most 1.0 mm or at most 0.8 mm, and/or with (ii) a height of at least 0.4 mm, preferably at least 0.5 mm or at least 0.6 mm, wherein the convexity is determined without considering the first and second circumferential blades.

15. A method of producing a tire according to at least one of the claims 1 to 12, the method comprising at least the steps of:
a) extruding a tread intended to be divided in the tire width direction between a first shoulder portion (13), a central portion (15) and a second shoulder portion (17), wherein the tread preferably has a constant thickness across its axial width;
b) providing a carcass with one or more belts (19, 21), preferably two belts (19, 21), and at most two overlay layers (23, 25), preferably one or two overlay layers (23, 25);
c) attaching the tread to the carcass so as to cover the one or more belts (19, 21) and the at most two overlay layers (23, 25);
d) attaching two sidewalls to the carcass and over the axial edges of the tread; and
e) curing the tire in a tire mold.
